# EUROPÄISCHE PATENTSCHRIFT

(11) **EP 1 738 856 B1**
(45) Veröffentlichungstag und Bekanntmachung des Hinweises auf die Patenterteilung: **31.03.2010**
(21) Anmeldenummer: 06010505.3
(22) Anmeldetag: 22.05.2006
(51) Int. Cl.: B23K 20/12

(54) **Vorrichtung zum Reibrührschweissen mit einem zusätzlichen unabhängig von einem ersten Innensegment der Vorrichtung drehend antreibbaren Reibflächensegment**
Tool for friction stir welding with a supplementary friction surface segment independently rotatable with respect to a inner segment of the tool
Outil de soudage par friction malaxage avec un segment de friction surfacique pouvant être mis en rotation d'une manière indépendante par rapport à un segment intérieur de l'outil

(30) Priorität: 27.06.2005 DE 102005029882
(43) Veröffentlichungstag der Anmeldung: 03.01.2007
(73) Patentinhaber: GKSS-Forschungszentrum Geesthacht GmbH, 21502 Geesthacht (DE)
(72) Erfinder: Zettler, Rudolph, 21502 Geesthacht (DE); Sheikhi, Shahram, 21039 Escheburg (DE); Beyer, Mathias, 21391 Reppenstedt (DE); Dos Santos, Dr. Jorge, 21395 Tespe (Avendorf) (DE); Roos, Arne, 21483 Juliusburg (DE); Loitz, Henry, 22043 Hamburg (DE)
(74) Vertreter: UEXKÜLL & STOLBERG

(56) Entgegenhaltungen:
- EP-A- 1 415 752
- WO-A-01/28732
- WO-A-2006/055530
- JP-A- 11 320 127
- JP-A- 2004 358 513
- US-A1- 2003 042 292

## Beschreibung

Die vorliegende Erfindung betrifft eine Vorrichtung zum Reibrührschweißen gemäß dem Oberbegriff des Anspruchs 1.

Das Prinzip des Reibschweißens ist seit vielen Jahren aus dem Stand der Technik bekannt und beinhaltet, dass eine Relativbewegung zwischen zwei Werkstücken stattfindet, während diese entlang einer Berührungslinie gegeneinander gepresst werden. Durch die Reibung wird ein plastifizerter Bereich entlang der Berührungslinie erzeugt, so dass sich bei einem Stopp der Relativbewegung der plastifizierte Bereich verfestigen kann und sich die Werkstücke miteinander verbinden. Diese Technik ist insbesondere beim Schweißen von Aluminium und seinen Legierungen von Vorteil. Bei herkömmlichen Schweißtechniken können sich bei diesen Werkstoffen zusammen mit dem Luftsauerstoff Oxide bilden, die verhindern, dass sich eine Schweißnaht mit hinreichender Festigkeit bildet. Dagegen tritt dieser störende Effekt der Oxidbildung beim Reibschweißen nicht auf.

Nachteilig am Reibschweißen ist jedoch, dass eine Relativbewegung der zu verbindenden Werkstücke erforderlich ist. Dies ist besonderes dann ein Problem, wenn große Werkstücke miteinander verbunden werden sollen, da dann Vorrichtungen und Aufnahmen erforderlich sind, die die gesamten Werkstücke halten und gegeneinander bewegen müssen. Um dieses Problem zu vermeiden, ist man zum Reibrührschweißen (Friction Stir Welding; FSW) übergegangen. Aus der WO 93/10935 ist bekannt, einen Stift in den Stoß zwischen aneinander angrenzende und zu verbindende Werkstücke einzuführen und diesen in Rotation zu versetzen, wobei der Stift eine größere Härte und einen höheren Schmelzpunkt als das Material der Werkstücke aufweist. Während der Rotation des Stifts werden die Werkstücke gegeneinander gepresst, so dass durch die Reibung zwischen dem Stift und den Werkstücken der Randbereich beider Werkstücke plastifiziert wird. Wird der Stift an dem Stoß entlang weiter bewegt, erstarrt das plastifizierte Material wieder und es kann so eine Schweißnaht erzeugt werden.

Um eine hinreichende Reibung auch im oberflächennahen Bereich des Stoßes zu erreichen, hat es sich als vorteilhaft erwiesen, oberhalb und/oder unterhalb des Stifts Schultern vorzusehen, die auf einer Oberfläche der zu verbindenden Werkstücke aufliegen und zusammen mit dem Stift ebenfalls an dem Material reiben. Aus der US 6,199,745 ist dazu bekannt, die Kraft, mit der die Schultern gegen die Oberseite und die Unterseite der Werkstücke gepresst werden, getrennt zu regeln, um eine optimale Wärmeverteilung über die Querschnittsfläche des Stoßes zu erreichen.

Auch die US 6,758,382, von der die vorliegende Erfindung ausgeht, offenbart, die Drücke, mit denen die obere und die untere Schulter gegen die Oberflächen des Werkstücks gepresst werden, sowie die Position der Schultern relativ zu den Werkstükken zu regeln. Darüber hinaus ist die untere Schulter lösbar mit dem Stift verbunden, so dass diese leicht entfernt werden kann und die Vorrichtung auch in solchen Fällen einsetzbar ist, in denen die Werkstücke auf einer Unterlage aufliegen.

Durch die Reibung des Stifts und der Schulter(n) werden auf die Werkstücke jedoch Kräfte ausgeübt, die von einer Aufnahme für die Werkstücke aufgenommen werden müssen. Soll eine Vorrichtung zum Reibrührschweißen mit einem herkömmlichen Roboter verwendet werden, ergibt sich häufig das Problem, dass die Roboter aufgrund ihrer Bauweise nicht die notwendige Stabilität aufweisen, um die durch den Stift und die Schultern erzeugten, in der Ebene der Schweißnaht verlaufenden Kräfte aufzunehmen.

Ein weiteres Problem besteht darin, dass die Eigenschaften der Schweißnaht durch die Temperaturverteilung und den durch die Reibung zwischen Stift und Schulter(n) sowie den Werkstücken verursachten Materialtransport bestimmt werden. Somit können die Eigenschaften der Schweißnaht nur durch eine Veränderung der Drehzahl von Stift und Schulter(n) sowie der Geschwindigkeit, mit der der Stift linear entlang des Stoßes bewegt wird, beeinflusst werden, so dass eine gezielte Beeinflussung der Eigenschaften daher nur schwer möglich ist.

In der JP 2004 358513 A wird eine Vorrichtung zum Reibrührschweißen gemäß dem Oberbegriff des Anspruchs 1 offenbart. Hierbei wird ein Stift (1) einer Reibrührschweissvorrichtung von einem einstückig mit dem Stift ausgebildeten ersten Innensegment und von einem ersten Reibflächensegment (2) umgeben, wobei Stift und Reibflächensegment unabhängig voneinander drehend angetrieben sind.

Aus der WO 01/28732 A1 ist eine Reibrührschweißvorrichtung bekannt, bei der ein Stift entgegengesetzt zu der ihn umgebenden Schulter angetrieben werden kann.

Die EP 1 415 752 A1 offenbart ein Verfahren und eine Vorrichtung zum Reibrührschweißen, wobei ein einen Stift umgebendes Widerlager in Kontakt mit einem Werkstück gebracht wird. Hierbei dient eine Einkerbung zwischen dem Widerlager und dem Reibflächensegment als Pufferraum für plastifiziertes Werkstückmaterial.

In der -US 2003/00442292 wird eine Reibrührschweißvorrichtung beschrieben, wobei eine Möglichkeit zum Zuführen von Zuschlagstoffen in eine Schweißnaht vorgesehen ist.

Schließlich sind die aus dem Stand der Technik bekannten Reibrührschweißvorrichtungen für eine spezielle Anordnung der miteinander zu verbindenden Werkstücke ausgelegt und können für andere Geometrien nicht eingesetzt werden. Daher ist es bei einem Wechsel des Werkstücktyps erforderlich, auch die Reibrührschweißvorrichtung zu wechseln, was mit Rüstzeiten und damit verbundenen Kosten einher geht. Es ist somit wünschenswert, dass eine universell einsetzbare Vorrichtung zum Reibrührschweißen zur Verfügung steht.

Daher liegt der vorliegenden Erfindung die Aufgabe zugrunde, eine Vorrichtung zum Reibrührschweißen bereitzustellen, mit der die Energie, die über die Reibung zwischen Stift und Reibfläche einerseits und Werkstück andererseits in das Werkstück eingebracht wird, besser eingestellt werden kann und auch von der Unterseite her die Eigenschaften der Schweißnaht beeinflusst werden können.

Eine Vorrichtung zum Reibrührschweißen gemäß der Erfindung ist im Anspruch 1 definiert.

Die erste Reibfläche ist beim Schweißen im Allgemeinen zwischen der Halterung der Vorrichtung mit dem Antrieb und dem Werkstück angeordnet und kann daher auch als "obere" Reibfläche angesehen werden. Es ist aber auch denkbar, dass das Werkstück zwischen der Halterung und der ersten Reibfläche angeordnet wird, so dass die erste Reibfläche dann "von unten" an dem Werkstück anliegt.

Das erste Reibflächensegment mit der ersten Reibfläche und der Stift können unabhängig voneinander in Rotation versetzt werden, so dass durch unterschiedliche Drehzahlen die Energie an der Oberfläche und an den Stößen unterschiedlich eingestellt werden kann, die durch die Reibung in das Material der zu verbindenden Werkstücke eingebracht wird. Insbesondere kann so eine gleichmäßige Temperaturverteilung im Bereich der späteren Schweißnaht erreicht werden, was mit einer größeren Homogenität des Gefüges der Schweißnaht verbunden ist. Mit der erfindungsgemäßen Vorrichtung ist es insbesondere möglich, die über die Oberfläche der Werkstücke eingebrachte Energie unabhängig von der über die Berührungsflächen eingebrachten Energie einzustellen. Außerdem kann durch die getrennte Einstellung der Drehzahlen von erster Reibfläche und Stift der Materialtransport im Bereich der Schweißnaht gesteuert werden.

Wenn der Stift und die erste Reibfläche entgegengesetzt zueinander in Rotation versetzt werden, ergibt sich unabhängig von der Möglichkeit der Beeinflussung der Eigenschaften der Schweißnaht die Möglichkeit, die auf die Werkstücke wirkenden, aus der Reibung resultierenden Kräfte in der Ebene der Erstreckungsrichtung der Schweißnaht zu reduzieren bzw. zu eliminieren; denn die durch den Stift und die erste Reibfläche verursachten Kräfte wirken dann in entgegengesetzte Richtungen. Dadurch kann das resultierende Moment im Wesentlichen neutralisiert werden. Eine solche Vorrichtung kann dann auch zusammen mit Trägersystemen verwendet werden, die selbst keine hohe Steifigkeit aufweisen, um die sonst auftretenden größere Momente aufzunehmen. Damit wird der Einsatz herkömmlicher Roboter ermöglicht.

Durch das erste Innensegment, das den Stift umgibt und einen größeren Außendurchmesser als der Stift hat, wird erreicht, dass sich die Kräfte, die von dem Stift sowie dem ersten Innensegment auf der einen Seite und der ersten Reibfläche auf der anderen Seite auf die Werkstücke ausgeübt werden, gegeneinander aufheben können, sofern sich das erste Reibflächensegment mit der ersten Reibfläche entgegengesetzt zum Stift und zum ersten Innensegment dreht. Durch das sich mit dem Stift drehende erste Innensegment mit größerem Durchmesser und einer an den Werkstücken anliegenden Innenreibfläche wird insbesondere der Effekt ausgeglichen, der aus dem weitaus größeren Durchmesser des ersten Reibflächensegments und dem damit verbundenen größeren Drehmoment herrührt.

Dabei kann der Stift in bevorzugter Weise mit dem ersten Innensegment verbunden sein, so dass das erste Innensegment den Stift aufnimmt, wobei in einer besonders bevorzugten Ausführungsform der Stift und das erste Innensegment einstückig ausgeführt sind, was den Aufbau weiter vereinfacht.

In einer weiteren bevorzugten Ausführungsform ist der Stift neben der Rotierbarkeit auch in seiner Erstreckungsrichtung linear verschiebbar, wobei auch eine periodische Verschiebung stattfinden kann, so dass der Stift auch mit einer Bewegung senkrecht zur Erstreckungsrichtung der Schweißnaht an den Berührungsflächen reiben kann. Dadurch kann zusätzlich zum Materialtransport in der Ebene der ersten Reibfläche auch der Materialtransport in Erstreckungsrichtung des Stifts beeinflusst werden.

Das erste Reibflächensegment ist von einem ersten Außensegment umgeben. Bevorzugt ist das ersten Außensegment zu dem ersten Reibflächensegment frei drehbar. Dadurch kann der Auswurf von Material weg von der Schweißnaht sowie eine Gratbildung infolge der Rotation der ersten Reibfläche verhindert werden. Ein solcher Auswurf wäre damit verbunden, dass die Stärke der Schweißnaht geringer als die des angrenzenden Materials ist mit der Folge, dass die Schweißnaht frühzeitig versagen kann und eine Sollbruchstelle darstellt. Durch das erste Außensegment kann eine solche "geometrische" Schwächung der Schweißnaht verhindert werden, da dieses Segment einen Auswurf blokkiert.

Ein solcher Aufbau mit einem Außensegment ist auch deswegen vorteilhaft, weil dadurch der Bereich um den Stoß zwischen den zu verbindenden Werkstücken, der durch Reibung thermisch beeinflusst wird, begrenzt werden kann. Insbesondere wenn das erste Außensegment drehfest angeordnet ist und damit nicht relativ zu den Werkstücken rotiert und gekühlt ist, wird im Wesentlichen nur der Bereich der Werkstücke thermisch beeinflusst, der sich innerhalb des äußeren Umfangs der ersten Reibfläche erstreckt. Die Breite des Übergangsbereichs zwischen dem Bereich, der aufgeschmolzen wird, und dem, der unbeeinflusst bleibt, wird insbesondere durch das gekühlte Außensegment so schmal wie möglich gehalten. Dies ist deswegen von Vorteil, weil sich besonders dieser Übergangsbereich als anfällig für spätere Brüche erwiesen hat.

Weiter ist es bevorzugt, dass das erste Reibflächensegment in Erstreckungsrichtung des Stifts verschiebbar ist, so dass mit der erfindungsgemäßen Vorrichtung auch ein sogenanntes Punktschweißen ausgeführt werden kann, wie es in der WO 01/36144 detaillierter beschrieben ist. Dabei wird der ebenfalls in seiner Erstreckungsrichtung entlang der Drehachse verschiebbare Stift, während er rotiert, in zwei übereinander angeordnete Werkstücke abgesenkt, wobei der Stift zunächst in das erste und dann in das zweite Werkstück eintritt. Durch die Rotation des Stifts wird der den Stift umgebende Bereich der Werkstücke plastifiziert, wobei das plastische Material in Folge der Abwärtsbewegung des Stifts nach oben gedrückt wird. Wenn parallel zur Bewegung des Stifts in die Werkstücke hinein eine Bewegung des Reibflächensegments weg von den Werkstücken erfolgt, kann das herausgedrückte Material in dem so gebildeten ringförmigen Raum zwischen Reibflächen- und Außensegment aufgenommen werden. Wenn der Stift dann wieder aus den Werkstükken herausbewegt wird, kann das Reibflächensegment zu den Werkstücken hin abgesenkt werden, so dass das plastische Material zurück in das von dem Stift freigegebene Loch gedrückt wird. Wenn dieses Material dann in dem durch den Stift gebildeten Loch erstarrt, ergibt sich eine punktförmige Verbindung zwischen den übereinanderliegenden Werkstücken. Auf diese Weise wird eine Reibrührschweißvorrichtung bereitgestellt, die für unterschiedliche Verbindungsgeometrien und damit universell einsetzbar ist.

Bevorzugt werden das erste Reibflächensegment und der Stift von einem ersten Antrieb angetrieben, wobei Mittel vorgesehen sind, um die Drehzahl und Drehrichtung von der ersten Reibfläche und dem Stift unabhängig einzustellen. Durch nur einen Antrieb kann die Baugröße der Vorrichtung gering gehalten werden und es bleibt eine leichte Handhabbarkeit gegeben. Die unterschiedlichen Drehrichtungen von Stift und erster Reibfläche können in einer bevorzugten Ausführungsform in einfacher Weise durch ein Wendegetriebe realisiert werden, wobei weiter bevorzugt ein Kegelradgetriebe eingesetzt wird, um die Baugröße weiter zu reduzieren.

Gemäß der Erfindung weist die Vorrichtung zusätzlich zur ersten Schulter mit der ersten Reibfläche eine zweite Schulter mit einer zweiten Reibfläche auf, wobei die zweite Reibfläche in einem Abstand zu der ersten Reibfläche angeordnet ist und die zweite Reibfläche zu der ersten Reibfläche weist. Weiterhin kann die zweite Reibfläche unabhängig von dem Stift in Rotation versetzt werden. Durch die zweite Schulter wird auch auf der von der ersten Reibfläche abgewandte Oberfläche der Werkstücke eine Anlagefläche bereitgestellt, durch die die Position der Werkstücke festgelegt wird. Durch die zweite Schulter kann mit der Vorrichtung auch das sogenannte Doppelschulter-FSW-Verfahren durchgeführt werden. Mit der zweiten Reibfläche, die ebenfalls unabhängig von dem Stift rotiert, können auch von der Unterseite her die Eigenschaften der Schweißnaht beeinflusst werden.

In bevorzugter Weise kann die untere Schulter ebenfalls mit einer Drehrichtung entgegengesetzt zu dem Stift in Rotation versetzt werden, um so das auf die Werkstücke wirkende resultierenden Moment zu minimieren.

Erfindungsgemäß ist der Abstand zwischen der ersten Reibfläche und der zweiten Reibfläche veränderbar, so dass die Werkstücke zwischen der ersten und der zweiten Schulter gehalten werden können und der zwischen den Reibflächen sowie den Werkstücken wirkende Druck gesteuert werden kann.

In zu der ersten Schulter analogen Weise ist erfindungsgemäß auch die zweite Schulter mit einem Reibflächen-, einem Innen und einem Außensegment versehen, wobei dadurch die schon im Zusammenhang mit der ersten Schulter erläuterten Vorteile erreicht werden können.

In einer ersten Alternative kann das zweite Reibflächensegment ebenfalls von dem ersten Antrieb in Rotation versetzt werden, wodurch eine Vorrichtung mit möglichst geringer Baugröße erreicht wird. In einer zweiten Alternative kann aber auch ein zweiter Antrieb vorgesehen sein, durch den das zweite Reibflächensegment angetrieben wird. Auf diese Weise kann die zweite Reibfläche unabhängig von der ersten Reibfläche gesteuert werden, so dass die Eigenschaften der Schweißnaht noch besser eingestellt werden können.

In einer weiteren bevorzugten Ausführungsform ist ein Kanal mit einer Austrittsöffnung zum Einbringen von Zuschlagsstoffen in die Schweißnaht vorgesehen. Durch Zuschlagsstoffe, insbesondere Skandiumpulver, können die Eigenschaften der Rührzone im Bereich der Schweißnaht gezielt verbessert werden. Durch den zugefügten Zuschlagsstoff können ferner im Bereich der Schweißnaht spezielle Legierungen gebildet werden, die die Qualität der Schweißnaht verbessern können. Dazu kann das Metallpulver durch einen Kanal in dem Stift und/oder durch eine Öffnung, die insbesondere durch den Spalt zwischen erstem Reibflächensegment und erstem Innensegment gebildet sein kann, in die Schweißnaht eingebracht werden, was zu einer guten Durchmischung zwischen dem Material der Werkstücke und dem Zuschlagstoff und damit zu einer homogenen Schweißnaht führt.

Im Falle des Reibrührschweißens von Werkstücken aus Aluminium oder Legierungen davon kann es sich bei den Zuschlagsstoffen insbesondere um Kupfer, Mangan, Silizium, Magnesium, Zink oder Aluminiumoxid handeln. Dabei ist Kupfer mit dem Vorteil verbunden, dass es die Zugfestigkeit im Bereich der Schweißnaht erhöht. Mangan erhöht die Festigkeit, ohne dass es dabei zu einem Verlust der Duktilität kommt. Wird Silizium in den Bereich der Schweißnaht eingebracht, reduziert dies die Schmelztemperatur des die Schweißnaht bildenden Materials. Magnesium als Zuschlagsstoff ist mit dem Vorteil verbunden, dass es die Festigkeit und Korrosionsbeständigkeit des Materials der Schweißnaht im Vergleich zum Aluminium der zu verbindenden Werkstücke erhöht. Zink und Magnesium erhöhen zudem die Zugfestigkeiten. Aluminiumoxid als Zuschlagsstoff führt schließlich zu einer Verbesserung der Oberflächenhärte und der Verschleißfestigkeit sowie zu einer Erhöhung der Festigkeit.

Im Folgenden wird die Erfindung anhand einer lediglich bevorzugte Ausführungsbeispiele darstellenden Zeichnung erläutert. In der Zeichnung zeigen
- Fig. 1: ein erstes Ausführungsbeispiel einer Reibrührschweißvorrichtung gemäß der vorliegenden Erfindung,
- Fig. 2: ein zweites Ausführungsbeispiel einer Reibrührschweißvorrichtung,
- Fig. 3: ein drittes Ausführungsbeispiel einer Reibrührschweißvorrichtung,
- Fig. 4: ein viertes Ausführungsbeispiel einer erfindungsgemäßen Reibrührschweißvorrichtung und
- Fig. 5: eine Darstellung des Antriebs für eine Vorrichtung gemäß der vorliegenden Erfindung.

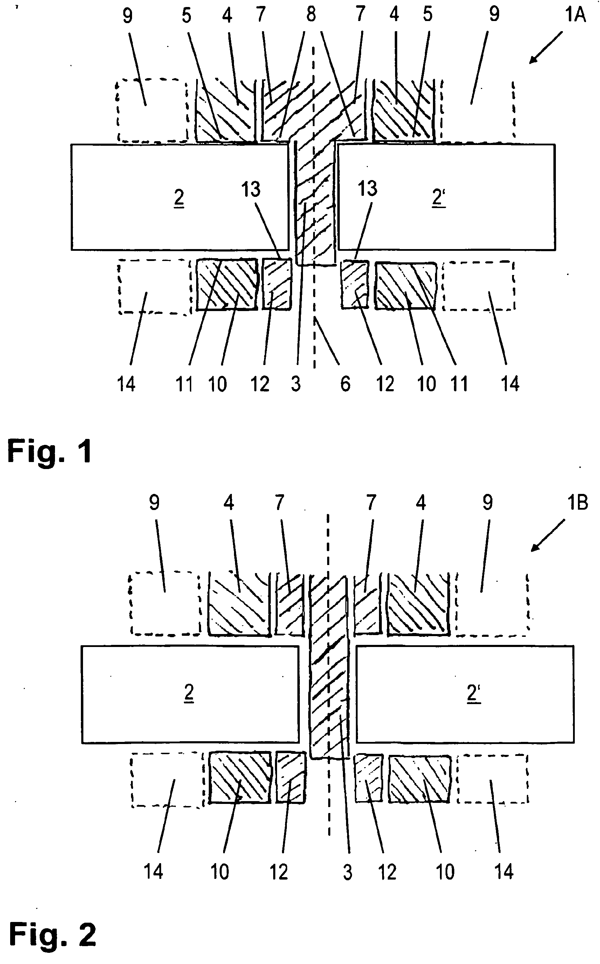

In Fig. 1 ist ein erstes Ausführungsbeispiel der vorliegenden Erfindung dargestellt. Die Vorrichtung 1A zum Reibrührschweißen, die beispielsweise entlang des Stoßes geführt werden kann, entlang dessen zwei Werkstücke 2, 2' aneinander anliegen, umfasst einen Stift 3 und ein erstes Reibflächensegment 4, wobei das erste Reibflächensegment 4 kreisringförmig ausgebildet ist. Der Stift 3 und das erste Reibflächensegment 4 sind um eine gemeinsame Drehachse 6 drehend angetrieben. Hierbei ist es zum einen denkbar, dass separate Antriebe für den Stift 3 und das erste Reibflächensegment 4 vorgesehen sind. Es kann aber auch ein erster Antrieb gemeinsam sowohl für den Stift 3 als auch für das erste Reibflächensegment 4 verwendet werden.

Das erste Reibflächensegment 4 weist eine erste Reibfläche 5 zur Anlage an den Werkstücken 2, 2' auf. Des Weiteren ist ein mit dem Stift 3 verbundenes erstes Innensegment 7 vorgesehen, das von dem ersten Reibflächensegment 4 umgeben ist, wobei das erste Reibflächensegment 4 unabhängig von dem ersten Innensegment 7 und damit unabhängig von dem Stift 3 drehend angetrieben ist. In diesem bevorzugten Ausführungsbeispiel ist außerdem das erste Innensegment 7 einstückig mit dem Stift 3 ausgebildet. Das erste Innensegment 7 hat einen größeren Durchmesser als der Stift 3 und weist eine erste Innenreibfläche 8 auf, die auf der Oberfläche der Werkstücke 2, 2' anliegen kann. Der Stift 3 mit dem ersten Innensegment 7 und das erste Reibflächensegment 4 sind mit zueinander unterschiedlichen Drehzahlen antreibbar. Insbesondere ist es möglich, dass der Stift 3 und das erste Reibflächensegment 4 mit zueinander entgegengesetzter Drehrichtung drehend angetrieben werden.

In dem Fall, in dem der Stift 3 und das erste Reibflächensegment 4 mit zueinander entgegengesetzter Drehrichtung angetrieben werden, kompensieren sich die auf die Werkstücke 2, 2' durch den Stift 3 in Verbindung mit der ersten Innenreibfläche 8 ausgeübten Drehmomente mit dem Drehmoment, das auf die Werkstücke 2, 2' durch die erste Reibfläche 5 ausgeübt wird. Diese Kompensation führt dazu, dass die Aufnahme für die Werkstücke 2, 2' weniger Kräfte aufnehmen muss. Dieser Effekt wird dadurch erreicht, dass neben der Umfangsfläche des Stifts 3 noch die erste Innenreibfläche 8 mit einem im Vergleich zu dem Stift 3 größeren Umfang auf die Werkstücke 2 Reibungskräfte ausübt

Die Vorrichtung 1A weist erfindungsgemäß außerdem ein erstes Außensegment 9 auf, das das erste Reibflächensegment 4 umgibt. Dabei ist das erste Reibflächensegment 4 frei drehbar zu dem ersten Außensegment 9, und das erste Außensegment 9 ist vorzugsweise drehfest in Bezug auf die Werkstücke 2 angeordnet. Dabei ist das erste Außensegment 9 kühlbar, um so den Bereich der Werkstücke 2 einzugrenzen, der durch die eingebrachte Reibungsenergie thermisch beeinflusst wird.

Im insoweit bevorzugten Ausführungsbeispiel weist die Vorrichtung 1A erfindungsgemäß eine zweite Schulter auf, die ein zweites Reibflächensegment 10 mit einer zweiten Reibfläche 11 umfasst. Die zweite Reibfläche 11 ist in einem Abstand zu der ersten Reibfläche 5 angeordnet und weist zu der ersten Reibfläche 5 hin. Ferner sind erfindungsgemäß das zweite Reibflächensegment 10 und der Stift 3 unabhängig voneinander drehend angetrieben. Insbesondere kann das zweite Reibflächensegment 10 mit zu dem Stift 3 entgegengesetzter Drehrichtung angetrieben werden, um wiederum zu gewährleisten, dass die auf die Werkstücke 2, 2' ausgeübten Drehmomente sich gegenseitig kompensieren. Um Werkstücke 2, 2' zwischen den Reibflächen 5, 16 einspannen zu können, ist der Abstand zwischen der ersten Reibfläche 5 und der zweiten Reibfläche 11 veränderbar.

Ferner weist die zweite Schulter in diesem erfindungsgemäßen Ausführungsbeispiel ein zweites Innensegment 12 auf, das von dem zweiten Reibflächensegment 10 umgeben ist und mit einer zweiten Innenreibfläche 13 zur Anlage an die Werkstücke 2, 2' versehen ist. Dabei ist das zweite Innensegment 12 ebenfalls drehend um die Drehachse 6 angetrieben, um wie das erste Innensegment 7 zur Kompensation der Drehmomente beizutragen.

Die zweite Schulter weist außerdem erfindungsgemäß ein zweites Außensegment 14 auf, das bevorzugt drehfest in Bezug auf Werkstücke 2 angeordnet ist und ferner kühlbar ausgebildet ist, um den thermisch beeinflussten Bereich der Werkstücke 2 zu beschränken.

Durch die optional vorgesehene zweite Schulter mit dem zweiten Reibflächensegment 10, dem zweiten Innensegment 12 und dem zweiten Außensegment 14 kann mit der erfindungsgemäßen Vorrichtung nicht nur das klassische FSW durchgeführt werden, bei dem nur auf einer Oberfläche der Werkstücke 2, 2' eine Schulter aufliegt, sondern es ist auch möglich, das sogenannte Doppelschulter-FSW-Schweißen durchzuführen.

Mit der erfindungsgemäßen Vorrichtung 1A können zwei Werkstükke 2, 2' entlang einer Verbindungsfläche in der Weise miteinander verbunden werden, dass ein benachbart zu der Verbindungsfläche angeordneter Bereich des ersten Werkstücks 2 und/oder des zweiten Werkstücks 2' durch den um die Drehachse 6 rotierenden Stift 3 plastifiziert wird. Dabei ist es zum einen denkbar, wie in Fig. 1 gezeigt, dass die Verbindungsfläche entlang des Stoßes verläuft, an dem die beiden Werkstücke aneinander anliegen. In diesem Fall wird die Vorrichtung 1A mit dem Stift 3 und dem Reibflächensegment 4, die um die Drehachse 6 rotieren, entlang der Verbindungsfläche bewegt, so dass die Bereiche in einem oder den beiden Werkstücken 2, 2' plastifiziert werden, die an die Verbindungsfläche angrenzen. Wenn sich die Vorrichtung 1A entlang der Verbindungsfläche weiterbewegt, erstarrt der vorher plastifizierte Bereich und die Werkstücke 2, 2' gehen eine Verbindung miteinander ein. Wie bereits oben beschrieben, werden durch den erfindungsgemäßen Aufbau die auf die Aufnahme für die Werkstücke 2, 2' ausgeübten Kräfte minimiert.

Das zweite Ausführungsbeispiel gemäß der vorliegenden Erfindung, das in Fig. 2 dargestellt ist, unterscheidet sich von dem in Fig. 1 dargestellten Ausführungsbeispiel dadurch, dass das erste Innensegment 7 nicht mit dem Stift 3 fest verbunden ist, sondern dass der Stift 3 in seiner Erstreckungsrichtung linear entlang der Drehachse 6 verschiebbar ist. Ferner ist das erste Reibflächensegment 4 in Erstreckungsrichtung des Stifts 3 verschiebbar und kann insbesondere weg von den Werkstücken 2, 2' verfahren werden, so dass mit der erfindungsgemäßen Vorrichtung ein sogenanntes "Punktschweißen" durchgeführt werden kann. Dabei wird der Stift 3, der anfänglich nicht über die erste Reibfläche 5 vorsteht, rotierend in das obere von zwei übereinanderliegenden Werkstücken abgesenkt, während gleichzeitig das erste Reibflächensegment 4 von den Werkstücken 2, 2' wegbewegt wird, so dass Material, das von dem Stift 3 verdrängt wird, in das durch das erste Reibflächensegment 4 freigegebene Volumen zwischen Innensegment 7 und Außensegment 9 eindringen kann. Wenn der Stift 3 anschließend wieder aus den Werkstücken zurückgezogen wird, wird das erste Reibflächensegment 4 wieder zu den Werkstücken hin verfahren, so dass das Material wieder in das von dem Stift 3 freigegebene Volumen hineingepresst wird. Bei diesem Punktschweißen wird die aus dem zweiten Reibflächensegment 10, dem zweiten Innensegment 12 und dem zweiten Außensegment 14 bestehende zweite Schulter nicht benötigt, sondern die Werkstücke werden vielmehr auf einer festen Unterlage durch das erste Außensegment 9 gehalten.

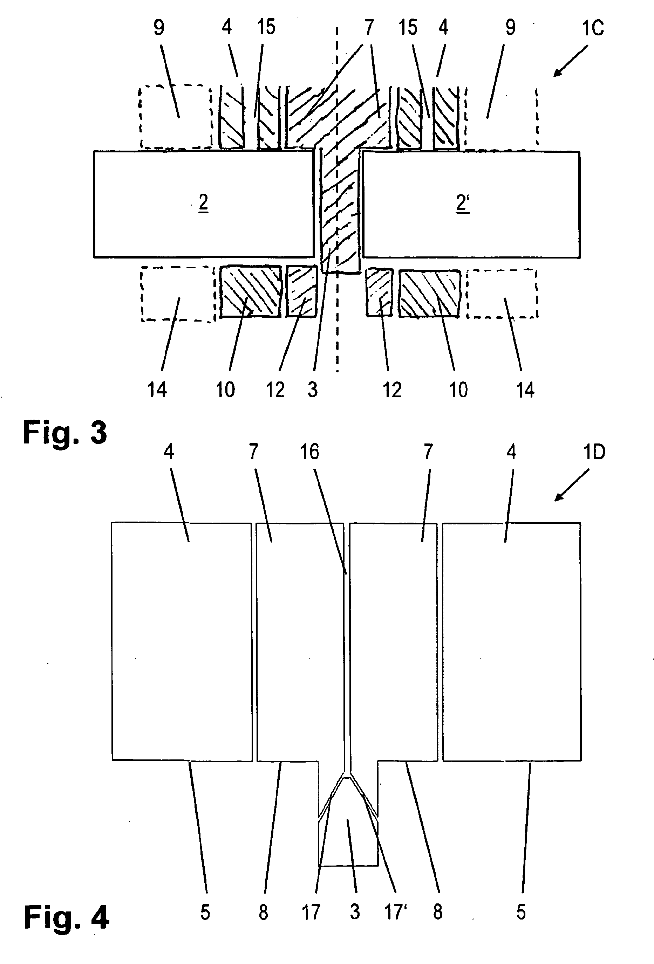

Das dritte, in Fig. 3 gezeigte Ausführungsbeispiel einer erfindungsgemäßen Vorrichtung 1C unterscheidet sich von dem ersten Ausführungsbeispiel, dass in Fig. 1 dargestellt ist, dadurch, dass in dem ersten Reibflächensegment 4 Reibflächenkanäle 15 vorgesehen sind, um einen Zuschlagstoff in den durch die Reibung mit dem Stift 3, mit dem Innensegment 13 und mit dem Reibflächensegment 4 plastifizierten Bereich einzubringen.

Alternativ kann, wie in dem in Fig. 4 gezeigten vierten Ausführungsbeispiel einer Vorrichtung 1D, ein Zentralkanal in dem Stift 3 vorgesehen sein, durch den ebenfalls ein Zuschlagsstoff in das Innere der Schweißnaht eingebracht wird. Die Vorrichtung 1D umfasst wiederum einen Stift 3 sowie ein erstes Reibflächensegment 4. Dabei ist das erste Reibflächensegment 4 kreisringförmig ausgebildet und umgibt den Stift 3. In diesem, insoweit bevorzugten Ausführungsbeispiel ist die Zuführeinrichtung als ein in dem Stift 3 verlaufender Zentralkanal ausgebildet, der einen ersten Abschnitt 16 aufweist, der in Erstreckungsrichtung des Stifts 3 parallel zu der Drehachse 6 verläuft, und Endabschnitte 17, 17', die sich von dem Ende des ersten Abschnitts 16 zu der Umfangsfläche des Stifts 3 erstrecken.

Im Falle des Reibrührschweißens von Werkstücken 2 aus Aluminium oder Legierungen davon kann es sich bei den Zuschlagsstoffen insbesondere um Kupfer, Mangan, Silizium, Magnesium, Zink oder Aluminiumoxid handeln.

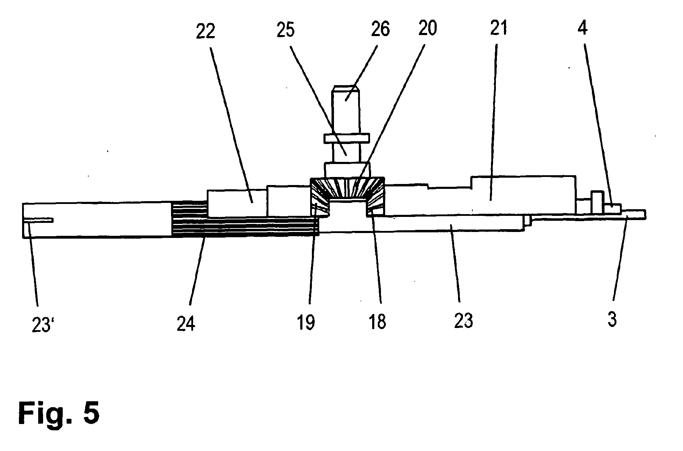

In Fig. 5 ist ein Ausführungsbeispiel für einen Antrieb für eine Vorrichtung gemäß der vorliegenden Erfindung dargestellt. Dabei weist der Antrieb ein Wendegetriebe auf, das ein erstes Kegelrad 18, ein zweites Kegelrad 19 und ein drittes Kegelrad 20 umfasst. Das erste Kegelrad 18 ist mit einer ersten Hohlwelle 21 verbunden, die wiederum mit dem ersten Reibflächensegment 4 verbunden ist. Das zweite Kegelrad 19 ist auf einer zweiten Hohlwelle 22 angebracht, wobei die zweite Hohlwelle 22 eine Innenverzahnung aufweist. In den Hohlwellen 21 und 22 ist eine Welle 23 geführt, die über einen Bereich mit Außenverzahnung 24 mit der zweiten Hohlwelle 22 drehfest verbunden ist.
Gleichzeitig kann die Welle 23 in axialer Richtung in Bezug auf die Hohlwellen 21, 22 verschoben werden, so dass der am Ende der Welle 23 angebrachte Stift 3 in Bezug auf das erste Reibflächensegment 4 axial verschoben werden kann. Damit ist der Stift 3 in seiner Erstreckungsrichtung linear verschiebbar und dabei drehend angetrieben. Die Welle 23 weist außerdem ein erstes Anschlussstück 23' auf, über das das Wendegetriebe mit einem Motor verbunden werden kann.

Das dritte Kegelrad 20 ist zwischen dem ersten und dem zweiten Kegelrad 18, 19 angeordnet und auf einer Anschlusswelle 25 mit einem zweiten Anschlussstück 26 angebracht. Die Kegelräder 18, 19, 20 greifen in der dargestellten Weise derart ineinander, dass bei Drehung der Anschlussstücke 23', 26 die Welle 23 sich in zu der ersten Hohlwelle 21 entgegengesetzten Drehrichtung dreht. Ein Antriebsmotor (nicht dargestellt) kann entweder an dem ersten Anschlussstück 23' oder an dem zweiten Anschlussstück 26 vorgesehen sein, je nachdem wie es die räumlichen Vorgaben an der Reibrührschweißvorrichtung erlauben.

Die Vorrichtungen zum Reibrührschweißen gemäß der vorliegenden Erfindung, die in den Figuren dargestellt sind, sind universell für verschiedene Reibrührschweiß-Verfahren einsetzbar. Einerseits ist das klassische Reibrührschweißen möglich, wenn auf eine rotierende Bewegung in der zweiten Schulter verzichtet wird. Ferner kann unter Hinzuziehung der zweiten Schulter sogenanntes Doppelschulter-Reibrührschweißen durchgeführt werden. Und schließlich ist es möglich, Schweißpunkte zu setzen, da gemäß dem zweiten Ausführungsbeispiel der Stift 3 und das erste Reibflächensegment 4 in Richtung der Drehachse 6 linear verschiebbar sind. Somit kann ohne langwierige Rüstzeiten und damit verbundene Kosten zwischen unterschiedlichen Reibrührschweißverfahren gewechselt werden, was eine hohe Flexibilität der Schweißvorrichtung gewährleistet.

## Patentansprüche

1. Vorrichtung zum Reibrührschweißen mit einem Stift (3) und einem ersten Reibflächensegment (4), wobei der Stift (3) und das erste Reibflächensegment (4) um eine Drehachse (6) drehend angetrieben sind und wobei das erste Reibflächensegment (4) eine erste Reibfläche (5) zur Anlage an ein Werkstück (2) aufweist, wobei ein erstes Innensegment (7) vorgesehen ist mit einer ersten Innenreibfläche (8) zur Anlage an ein Werkstück (2, 2'), wobei das erste Innensegment (7) den Stift (3) umgibt, wobei das erste Reibflächensegment (4) das erste Innensegment (7) umgibt und wobei das erste Reibflächensegment (4) unabhängig von dem ersten Innensegment (7) drehend angetrieben ist,
**dadurch gekennzeichnet, dass**
ein erstes Außensegment (9) vorgesehen ist, wobei das erste Außensegment (9) das erste Reibflächensegment (4) umgibt, wobei das erste Reibflächensegment (4) relativ zu dem ersten Außensegment (9) frei drehbar ist,
dass eine zweite Schulter vorgesehen ist, dass die zweite Schulter ein zweites Reibflächensegment (10) mit einer zweiten Reibfläche (11) in einem Abstand zu der ersten Reibfläche (5) aufweist, dass die zweite Reibfläche (11) zu der ersten Reibfläche (5) weist, dass das zweite Reibflächensegment (10) und der Stift (3) unabhängig voneinander drehend angetrieben sind, dass der Abstand zwischen der ersten Reibfläche (5) und der zweiten Reibfläche (11) veränderbar ist, dass die zweite Schulter ein zweites Innensegment (12) aufweist, dass das zweite Reibflächensegment (10) das zweite Innensegment (12) umgibt, dass die zweite Schulter ein zweites Außensegment (14) aufweist, dass das zweite Außensegment (14) das zweite Reibflächensegment (10) umgibt und dass das zweite Reibflächensegment (10) relativ zu dem zweiten Außensegment (14) drehbar ist.

2. Vorrichtung nach Anspruch 1, **dadurch gekennzeichnet, dass** das erste Innensegment (7) mit dem Stift (3) verbunden ist.

3. Vorrichtung nach Anspruch 2, **dadurch gekennzeichnet, dass** erste Innensegment (7) einstückig mit dem Stift (3) ausgebildet ist.

4. Vorrichtung nach einem der Ansprüche 1 bis 3, **dadurch gekennzeichnet, dass** der Stift (3) in Erstreckungsrichtung des Stifts (3) linear verschiebbar ist.

5. Vorrichtung nach einem der Ansprüche 1 bis 4, **dadurch gekennzeichnet, dass** der Stift (3) und das erste Reibflächensegment (4) mit zueinander unterschiedlichen Drehzahlen antreibbar sind.

6. Vorrichtung nach einem der Ansprüche 1 bis 5, **dadurch gekennzeichnet, dass** der Stift (3) und das erste Reibflächensegment (4) mit zueinander entgegengesetzter Drehrichtung drehend angetrieben sind.

7. Vorrichtung nach einem der Ansprüche 1 bis 6, **dadurch gekennzeichnet, dass** das erste Außensegment (9) drehfest angeordnet ist.

8. Vorrichtung nach einem der Ansprüche 1 bis 7, **dadurch gekennzeichnet, dass** das erste Außensegment (9) kühlbar ist.

9. Vorrichtung nach einem der Ansprüche 1 bis 8, **dadurch gekennzeichnet, dass** das erste Reibflächensegment (4) in Erstreckungsrichtung des Stifts (3) verschiebbar ist.

10. Vorrichtung nach einem der Ansprüche 1 bis 9, **dadurch gekennzeichnet, dass** ein erster Antrieb für den Stift (3) und das erste Reibflächensegment (4) vorgesehen ist.

11. Vorrichtung nach Anspruch 10, **dadurch gekennzeichnet, dass** der erste Antrieb ein Wendegetriebe aufweist.

12. Vorrichtung nach Anspruch 11, **dadurch gekennzeichnet, dass** das Wendegetriebe als Kegelradgetriebe ausgebildet ist.

13. Vorrichtung nach einem der Ansprüche 1 bis 12, **dadurch gekennzeichnet, dass** der Stift (3) und das zweite Reibflächensegment (10) mit entgegengesetzter Drehrichtung drehend angetrieben sind.

14. Vorrichtung nach einem der Ansprüche 1 bis 13, **dadurch gekennzeichnet, dass** das zweite Außensegment (14) drehfest angeordnet ist.

15. Vorrichtung nach einem der Ansprüche 1 bis 14, **dadurch gekennzeichnet, dass** zweite Außensegment (14) kühlbar ist.

16. Vorrichtung nach einem der Ansprüche 1 bis 15, **dadurch gekennzeichnet, dass** eine Zuführeinrichtung zum Einbringen eines Zuschlagstoffes in die Schweißnaht vorgesehen ist.

17. Vorrichtung nach Anspruch 16, **dadurch gekennzeichnet, dass** die Zuführeinrichtung als Zentralkanal in dem Stift (3) ausgebildet ist, dass der Zentralkanal eine Austrittsöffnung aufweist und dass die Austrittsöffnung in dem über die erste Reibfläche (5) vorstehenden Teil des Stifts (3) angeordnet ist.

18. Vorrichtung nach Anspruch 17, **dadurch gekennzeichnet, dass** der Zentralkanal einen ersten Abschnitt aufweist, der in Erstreckungsrichtung des Stifts (3) parallel zu der Drehachse (6) verläuft.

19. Vorrichtung nach Anspruch 18, **dadurch gekennzeichnet, dass** der Zentralkanal einen Endabschnitt aufweist, der sich von dem Ende des ersten Abschnitts zu der Umfangsfläche des Stifts (3) erstreckt.

20. Vorrichtung nach einem der Ansprüche 16 bis 19, **dadurch gekennzeichnet, dass** die Zuführeinrichtung als Reibflächenkanal (15), der eine Austrittsöffnung aufweist, in dem ersten Reibflächensegment (4) vorgesehen ist und dass die Austrittsöffnung in der ersten Reibfläche (5) angeordnet ist.

21. Vorrichtung nach einem der Ansprüche 16 bis 20, **dadurch gekennzeichnet, dass** die Zuführeinrichtung durch einen inneren Spalt gebildet wird, der zwischen dem ersten Reibflächensegment (4) und dem Stift (3) ausgebildet ist.

## Claims

1. Device for friction stir welding, with a pin (3) and a first friction surface segment (4), the pin (3) and the first friction surface segment (4) being driven in rotation about a rotation axis (6), and the first friction surface segment (4) has a first friction surface (5) for placing in contact with a workpiece (2), and a first inner segment (7) with a first inner friction surface (8) for placing in contact with a workpiece (2, 2') is provided, and the first inner segment (7) surrounds the pin (3), and the first friction surface segment (4) surrounds the first inner segment (7), and the first friction surface segment (4) is driven in rotation independently of the first inner segment (7),
**characterised in that**
a first outer segment (9) is provided, which first outer segment (9) surrounds the first friction surface segment (4), and the first friction surface segment (4) is freely rotatable relative to the first outer segment (9),
a second shoulder is provided, which second shoulder has a second friction surface segment (10) with a second friction surface (11) at a distance from the first friction surface (5) which is the same as that of the second friction surface (11) from the first friction surface (5), and the second friction surface segment (10) and the pin (3) are driven in rotation independently of one another, and the distance between the first friction surface (5) and the second friction surface (11) can be varied, and the second shoulder has a second inner segment (12) and the second friction surface segment (10) surrounds the second inner segment (12), and the second shoulder has a second outer segment (14), which second outer segment (14) surrounds the second friction surface segment (10), and the second friction surface segment (10) is rotatable relative to the second outer segment (14).

2. Device as claimed in claim 1, **characterised in that** the first inner segment (7) is connected to the pin (3).

3. Device as claimed in claim 2, **characterised in that** the first inner segment (7) is integral with the pin (3).

4. Device as claimed in one of claims 1 to 3, **characterised in that** the pin (3) is linearly displaceable in the direction in which the pin (3) extends.

5. Device as claimed in one of claims 1 to 4, **characterised in that** the pin (3) and the first friction surface segment (4) can be driven at different speeds of rotation from one another.

6. Device as claimed in one of claims 1 to 5, **characterised in that** the pin (3) and the first friction surface segment (4) are driven in rotation in opposite directions of rotation from one another.

7. Device as claimed in one of claims 1 to 6, **characterised in that** the first outer segment (9) is mounted so that it does not rotate.

8. Device as claimed in one of claims 1 to 7, **characterised in that** the first outer segment (9) can be cooled.

9. Device as claimed in one of claims 1 to 8, **characterised in that** the first friction surface segment (4) is displaceable in the direction in which the pin (3) extends.

10. Device as claimed in one of claims 1 to 9, **characterised in that** a first drive is provided for the pin (3) and the first friction surface segment (4).

11. Device as claimed in claim 10, **characterised in that** the first drive has a reversing mechanism.

12. Device as claimed in claim 11, **characterised in that** the reversing mechanism is provided in the form of a bevel gear mechanism.

13. Device as claimed in one of claims 1 to 12, **characterised in that** the pin (3) and the second friction surface segment (10) are driven in rotation in opposite directions of rotation.

14. Device as claimed in one of claims 1 to 13, **characterised in that** the second outer segment (14) is mounted so that it can not rotate.

15. Device as claimed in one of claims 1 to 14, **characterised in that** the second outer segment (14) can be cooled.

16. Device as claimed in one of claims 1 to 15, **characterised in that** a feed device is provided for introducing am additional material into the weld seam.

17. Device as claimed in claim 16, **characterised in that** the feed device is provided in the form of a central passage through the pin (3), which central passage has an outlet orifice, and the outlet orifice is disposed in the part of the pin (3) extending beyond the first friction surface (5).

18. Device as claimed in claim 17, **characterised in that** the central passage has a first portion which extends parallel with the rotation axis (6) in the direction in which the pin (3) extends.

19. Device as claimed in claim 18, **characterised in that** the central passage has an end portion, which extends from the end of the first portion to the peripheral surface of the pin (3).

20. Device as claimed in one of claims 16 to 19, **characterised in that** the feed device is disposed in the first friction surface segment (4) provided in the form of a friction surface passage (15) with an outlet orifice, and the outlet orifice is disposed in the first friction surface (5).

21. Device as claimed in one of claims 16 to 20, **characterised in that** the feed device is formed by an inner gap disposed between the first friction surface segment (4) and the pin (3).

## Revendications

1. Appareil pour le soudage par friction malaxage comprenant une tige (3) et un premier segment à surface de friction (4), dans lequel la tige (3) et le premier segment à surface de friction (4) sont entraînés en rotation autour d'un axe de rotation (6), et dans lequel le premier segment à surface de friction (4) comprend une première surface de friction (5) destinée à venir en contact contre une pièce à oeuvrer (2), dans lequel est prévu un premier segment intérieur (7) avec une première surface de friction intérieure (8) destinée à venir en contact avec une pièce à oeuvrer (2, 2'), dans lequel le premier segment intérieur (7) entoure la tige (3), dans lequel le premier segment à surface de friction (4) entoure le premier segment intérieur (7), et dans lequel le premier segment à surface de friction (4) est entraîné en rotation indépendamment du premier segment intérieur (7),
**caractérisé en ce qu'**
il est prévu un premier segment extérieur (9), le premier segment extérieur (9) entourant le premier segment à surface de friction (4) et le premier segment à surface de friction (4) étant librement rotatif par rapport au premier segment extérieur (9),
**en ce qu'**il est prévu un second épaulement, **en ce que** le second épaulement comprend un second segment à surface de friction (10) avec une seconde surface de friction (11) à distance de la première surface de friction (5), **en ce que** la seconde surface de friction (11) est tournée vers la première surface de friction (5), **en ce que** le second segment à surface de friction (10) et la tige (3) sont entraînés en rotation indépendamment l'un de l'autre, **en ce que** la distance entre la première surface de friction (5) et la seconde surface de friction (11) est modifiable, **en ce que** le second épaulement comprend un second segment intérieur (12), **en ce que** le second segment à surface de friction (10) entoure le second segment intérieur (12), **en ce que** le second épaulement comprend un second segment extérieur (14), **en ce que** le second segment extérieur (14) entoure le second segment à surface de friction (10), et **en ce que** le second segment à surface de friction (10) est rotatif par rapport au second segment extérieur (14).

2. Appareil selon la revendication 1, **caractérisé en ce que** le premier segment intérieur (7) est relié à la tige (3).

3. Appareil selon la revendication 2, **caractérisé en ce que** le premier segment intérieur (7) est réalisé d'une seule pièce avec la tige (3).

4. Appareil selon l'une des revendications 1 à 3, **caractérisé en ce que** la tige (3) est déplaçable de manière linéaire dans la direction d'extension de la tige (3).

5. Appareil selon l'une des revendications 1 à 4, **caractérisé en ce que** la tige (3) et le premier segment à surface de friction (4) sont susceptibles d'être entraînés avec des vitesses de rotation différentes l'un de l'autre.

6. Appareil selon l'une des revendications 1 à 5, **caractérisé en ce que** la tige (3) et le premier segment à surface de friction (4) sont entraînés en rotation avec des sens de rotation mutuellement opposés.

7. Appareil selon l'une des revendications 1 à 6, **caractérisé en ce que** le premier segment extérieur (9) est agencé solidaire en rotation.

8. Appareil selon l'une des revendications 1 à 7, **caractérisé en ce que** le premier segment extérieur (9) est susceptible d'être refroidi.

9. Appareil selon l'une des revendications 1 à 8, **caractérisé en ce que** le premier segment à surface de friction (4) est déplaçable dans la direction d'extension de la tige (3).

10. Appareil selon l'une des revendications 1 à 9, **caractérisé en ce qu'**il est prévu un premier entraînement pour la tige (3) et le premier segment à surface de friction (4).

11. Appareil selon la revendication 10, **caractérisé en ce que** le premier entraînement comprend une transmission à inversion.

12. Appareil selon la revendication 11, **caractérisé en ce que** la transmission à inversion est réalisée sous la forme de transmission à engrenages coniques.

13. Appareil selon l'une des revendications 1 à 12, **caractérisé en ce que** la tige (3) et le second segment à surface de friction (10) sont entraînés en rotation avec des sens de rotation opposés.

14. Appareil selon l'une des revendications 1 à 13, **caractérisé en ce que** le second segment extérieur (14) est agencé solidaire en rotation.

15. Appareil selon l'une des revendications 1 à 14, **caractérisé en ce que** le second segment extérieur (14) est susceptible d'être refroidi.

16. Appareil selon l'une des revendications 1 à 15, **caractérisé en ce qu'**il est prévu un moyen d'admission pour introduire un matériau d'apport dans le cordon de soudure.

17. Appareil selon la revendication 16, **caractérisé en ce que** le moyen d'admission est réalisé comme un canal central dans la tige (3), **en ce que** le canal central comporte une ouverture de sortie, et **en ce que** l'ouverture de sortie est agencée dans la partie de la tige (3) qui dépasse au-dessus de la première surface de friction (5).

18. Appareil selon la revendication 17, **caractérisé en ce que** le canal central comprend un premier tronçon qui s'étend parallèlement à l'axe de rotation (6) dans la direction d'extension de la tige (3).

19. Appareil selon la revendication 18, **caractérisé en ce que** le canal central comprend un tronçon final qui s'étend depuis l'extrémité du premier tronçon vers la surface périphérique de la tige (3).

20. Appareil selon l'une des revendications 16 à 19, **caractérisé en ce que** le moyen d'admission est prévu dans le premier segment à surface de friction (4) sous forme d'un canal à surface de friction (15) qui présente une ouverture de sortie, et **en ce que** l'ouverture de sortie est agencée dans la première surface de friction (5).

21. Appareil selon l'une des revendications 16 à 20, **caractérisé en ce que** le moyen d'admission est formé par une fente intérieure qui est réalisée entre le premier segment à surface de friction (4) et la tige (3).
